(19) Europäisches Patentamt
European Patent Office
Office européen des brevets

(11) **EP 1 719 313 B1**

(12) **EUROPÄISCHE PATENTSCHRIFT**

(45) Veröffentlichungstag und Bekanntmachung des Hinweises auf die Patenterteilung:
**03.09.2008 Patentblatt 2008/36**

(21) Anmeldenummer: **05706770.4**

(22) Anmeldetag: **23.02.2005**

(51) Int Cl.:
**H04L 25/06** (2006.01)    **H04L 25/493** (2006.01)

(86) Internationale Anmeldenummer:
**PCT/DE2005/000313**

(87) Internationale Veröffentlichungsnummer:
**WO 2005/083962 (09.09.2005 Gazette 2005/36)**

(54) **EMPFÄNGERSCHALTUNG FÜR APM- KODIERTE DATEN**

RECEIVER CIRCUIT FOR APM CODED DATA

CIRCUIT RECEPTEUR POUR DES DONNEES CODEES APM

(84) Benannte Vertragsstaaten:
**AT BE BG CH CY CZ DK EE ES FI FR GB GR HU IE IS IT LI LT LU MC NL PL PT RO SE SI SK TR**

(30) Priorität: **25.02.2004 DE 102004009745**

(43) Veröffentlichungstag der Anmeldung:
**08.11.2006 Patentblatt 2006/45**

(73) Patentinhaber: **Zentrum Mikroelektronik Dresden AG**
**01109 Dresden (DE)**

(72) Erfinder:
• **BARTHEL, Tom**
**65824 Schwalbach a. Taunus (DE)**
• **REICHEL, Thomas**
**01309 Dresden (DE)**

(74) Vertreter: **Ilberg, Roland**
**Ilberg - Weissfloh Patentanwälte,**
**Am Weissiger Bach 93**
**01328 Dresden (DE)**

(56) Entgegenhaltungen:
**DE-A1- 19 850 928        DE-C1- 4 316 810**
**US-A- 5 373 400          US-A- 6 134 279**

## Beschreibung

Technisches Gebiet

Die Erfindung betrifft eine Empfängerschaltung für APM- kodierte Daten, die in Abhängigkeit der Signalamplitude eines Datentelegramms, und getrennt nach positiven und negativen Spannungspulsen, abgetastet werden, insbesondere in einem AS-Interface Kommunikationssystem.

In einem AS (Aktuator- Sensor)- Interface Kommunikationssystem erfolgt ein überwiegend bitorientierter serieller Datenaustausch zwischen der Steuerungsseite (Master) und den peripheren Teilnehmern (Slaves) nach dem APM- Verfahren (Alternierende Puls Modulation). Hierbei wird zunächst auf der Sendeseite eine zu sendende Bitfolge in eine Bitfolge umkodiert, die bei jeder Änderung des Sendesignals zwecks gleichstromfreier Datenübertragung eine Phasenänderung bewirkt. Daraus erzeugte Sendestrompulse werden mit Hilfe der Induktivität des AS- Interface Netzgerätes in Spannungspulse differenziert und auf dem AS- Interface Bus zum Empfänger übertragen. Um eine geringe Störabstrahlung auf dem üblicherweise ungeschirmten Zweileiter-Flachdrahtkabel zu erreichen, werden die Spannungspulse nach hierfür geeigneter Formung der Sendestrompulse entsprechend dem Integral eines $\sin^2$- Pulses mit alternierender Pulsfolge übertragen. Jeder Anstieg des Sendestroms erzeugt einen negativen, jeder Abfall des Sendestromes einen positiven Spannungspulse. Jede Bitfolge beginnt definitionsgemäß mit einem negativen Spannungspuls, dem Startbit. Im Empfänger werden die Spannungspulse detektiert und wieder in die gesendete Bitfolge umgewandelt. Anwendung finden AS-Interface Kommunikationssysteme insbesondere in der industriellen Automatisierungstechnik zur verdrahtungsarmen und damit kostengünstigen Ansteuerung von Endgeräten, Sensoren und Aktuatoren.

Der Slave versorgt die ihm zugeordneten Sensoren und Aktuatoren einer industriellen Steuerung mit elektrischer Energie und wickelt die Kommunikation zwischen diesen und dem Master ab. AS- Interface typisch werden Daten und Energie auf demselben Bus übertragen.

Sowohl die Slaves als auch der Master besitzen für den bidirektionalen Datenaustauschs jeweils einen Sender und einen Empfänger. Während ein Slave immer nur mit einem Teilnehmer, dem ortsfesten Master, kommuniziert, muss der Master jede Slave- Antwort von jedem Ort im Kommunikationssystem aus verarbeiten können. Ein Problem bezüglich einer möglichst fehlerfreien Kommunikation sind dabei größere Schwankungen in der Amplitude der Spannungspulse in Datentelegrammen verschiedener Slaves zum Master, aber auch innerhalb eines Datentelegramms selbst. Diese Amplitudenschwankungen werden insbesondere hervorgerufen durch Lastschwankungen, durch Überschwingungspulse, durch die Anzahl und die Entfernung der an das offene Kommunikationssystem angeschlossenen Slaves und durch Reflexionen am Leitungsende. Weiterhin können von der Umgebung verursachte hochfrequente Störimpulse in das Übertragungskabel einstrahlen und ein Datentelegramm verfälschen. Werden Fehlpulse im Empfänger nicht erkannt, kommt es zu Funktionsstörungen im Kommunikationssystem oder widrigenfalls zu folgenschweren Fehlsteuerungen innerhalb einer industriellen Anlage.

Stand der Technik

Zur Eliminierung von Überschwingungspulsen ohne gleichzeitige Verfälschung binärer Sendesignale eines Datentelegramms wurde bereits in der DE 43 16 810 C1 eine zweikanalige analoge Filterschaltung für eine getrennte Filterung der positiven und der negativen Spannungspulse vorgeschlagen.

Aus der DE 198 50 928 C2 ist es bekannt, ausgehend von einer zweikanaligen Filterschaltung, zusätzlich die systembedingten Schwankungen in der Signalamplitude zu berücksichtigen. Hierzu werden die in einem Empfänger ankommenden binären Spannungspulse eines Datentelegramms zunächst einer Komparatoranordnung zugeführt, deren einzelne Komparatoren unterschiedliche Schwellwerte generieren. Eine Auswerteeinheit am Ausgang dieser ersten Komparatoranordnung ermittelt den Maximalwert der Amplitude des ersten Spannungspulses eines übertragenen Datentelegramms. In Abhängigkeit dieses Maximalwertes werden, aufgeteilt für die positiven und die negativen Spannungspulse, die jeweils vorgesehenen Referenzkomparatoren zweier weiterer Komparatoranordnungen ausgewählt. Den Ausgängen dieser zweiten und dritten Komparatoranordnungen für die positiven und negativen Spannungspulse ist jeweils ein Multiplexer nachgeordnet. Die Ausgänge der Multiplexer sind an den Eingang eines gemeinsamen Decoders geführt, mittels dessen die Folgen von positiven und negativen Spannungspulsen wieder in eine Folge binärer Ausgangssignale umgewandelt wird.

Nachteilig an dieser Schaltungsanordnung ist der hohe Aufwand für eine möglichst geringe Pulsfehlerrate und damit möglichst störungsarme Datenübertragung. Für die im Ausführungsbeispiel angegebene Filteranordnung mit 8 festgelegten Schwellwertstufen werden beispielsweise 24 analoge Komparatoren eingesetzt. Schließlich ist ein analoger Tiefpass für die Filterung von eingestrahlten Störpulsen am Eingang der Filterschaltung notwendig, der bei einer Implementierung in einer integrierten Schaltungsanordnung erheblich Platz beansprucht und die Reproduzierbarkeit der Einstellwerte erschwert.

Darstellung der Erfindung

Aufgabe vorliegender Erfindung ist es, die genannten Nachteile zu vermeiden, also den Schaltungsaufwand für eine sichere Detektion von Sendesignalen zu verringern und die Implementierung des Empfängers in hochintegrierter Schaltungstechnik zu verbessern. Eine weitere Aufgabe ist in diesem Zusammenhang, die Ausgangssignale der Komparatoren auf das Taktschema der nachfolgenden digitalen Schaltung zu synchronisieren.

Die Aufgabe wird erfindungsgemäß durch die Merkmale des unabhängigen Anspruchs 1 gelöst. Vorteilhafte Weiterbildungen geben die abhängigen Ansprüche 2 bis 10 an.

Bevorzugter Weg zur Ausführung der Erfindung

Die Erfindung und ihre Vorteile sollen anhand eines Ausführungsbeispiels nachstehend näher erläutert werden. In den zugehörigen Zeichnungen zeigen:

Fig. 1      das Blockschaltbild einer Empfängerschaltung eines AS-Interface Teilnehmers und

Fig. 2      zwei Kennlinien der Empfängerschaltung nach Fig. 1.

In einer Eingangsstufe **HP** des Empfängers, bestehend aus einem Hochpaß, werden zunächst die ankommenden Spannungspulse eines Datentelegramms von der Versorgungsgleichspannung getrennt. Die Spannungspulse werden auf einen Komparator **Cp,** einen weiteren Komparator **Cn0** und außerdem auf eine Komparatoranordnung geführt, die aus n Komparatoren **Cn1** ... **Cnn** besteht. Die Komparatoren **Cn0** ... **Cnn** werden zur Bestimmung des Maximalwertes des ersten negativen Spannungspulses eines Datentelegramms verwendet. Zur Detektion der nachfolgenden positiven und negativen Spannungspulse des Datentelegramms wird erfindungsgemäß jeweils nur ein Komparator verwendet, und zwar der Komparator **Cp** für die Spannungspulse positiver Polarität und der Komparator **Cn0** für die Spannungspulse negativer Polarität. Referenzspannungsquellen **REF1, REF2** und **REF3** stellen stufenweise einstellbare Referenzspannungen $VREF1\_0$ ... $V_{REF1\_n}$, $V_{REF2\_0}$ ... $V_{REF2\_n}$ und $V_{REF3\_1}$ ... $V_{REF3\_n}$ für stufenweise definierte Spannungswerte am Ausgang der Komparatoren **Cp, Cn0, Cn1** ... **Cnn** bereit. Die Referenzspannungen $V_{REF3\_1}$ ... $V_{REF3\_n}$ der Referenzspannungsquelle **REF3** werden den Komparatoren **Cn1** ... **Cnn** entsprechend den Erfordernissen des Kommunikationssystems fest vorgegeben. Die Referenzspannung für den Komparator **Cn0,** die zur Bestimmung des Maximalwertes verwendet wird, wird von einer noch zu beschreibenden Entscheiderlogik **RL** aus dem Bereich $V_{REF2\_0}$ ... $V_{REF2\_n}$ ausgewählt.

Die Referenzspannungen $V_{REF1\_0}$ ... $V_{REF1\_n}$ und $V_{REF2\_0}$ ... $V_{REF2\_n}$ der Referenzspannungsquellen **REF1** und **REF2** für die beiden Komparatoren **Cp** und **Cn0** werden umgeschaltet. Die Umschaltung wird von der Entscheiderlogik **RL** veranlasst, die an die Ausgänge der Komparatoren **Cn0** ... **Cnn** angeschlossen ist.

Grundlage für eine Umschaltung bildet der Maximalwert des ersten negativen Spannungspulses eines Datentelegramms, repräsentiert durch entsprechende Signalpegel $V_{n0}$ ... $V_{nn}$ an den Ausgängen der Komparatoren **Cn0** ... **Cnn.** Der Komparator **Cn0** wird folglich sowohl zur Bestimmung des Maximalwertes als auch zur Abtastung der negativen Spannungspulse verwendet, wodurch sich insgesamt ein Komparator einsparen lässt. Es wird jeweils eine Referenzspannung der Referenzspannungsquellen **REF1, REF2** ausgewählt, die beispielsweise 50% des gemessenen Maximalwertes des ersten negativen Spannungspulses eines Datentelegramms entspricht, und zwar mit positiver Polarität für die Referenzspannungsquelle **REF1** zur Abtastung der positiven Spannungspulse und mit negativer Polarität für die Referenzspannungsquelle **REF2** zur Abtastung der negativen Spannungspulse. Multiplexer **MUX1** und **MUX2** am Ausgang der Referenzspannungsquellen **REF1, REF2** schalten die beiden Komparatoren **Cp, Cn0** auf die ausgewählten Referenzspannungen $V_{RFF1\_0}$ ... $V_{REF1\_n}$ und $V_{REF2\_0}$ ... $V_{REF2\_n}$ um.

Die Abstände zwischen den einzelnen Referenzspannungen der Referenzspannungsquellen **REF1, REF2** und **REF3** können äquidistant sein oder exponentiell ansteigen, beginnend bei der betragsmäßig kleinsten Referenzspannung. Die Referenzspannungen der Referenzspannungsquellen **REF1, REF2** untereinander ändern sich dabei vorzugsweise um dieselben Beträge, wobei der betragsmäßig kleinste Wert für die positive und negative Polarität entweder identisch ist, aber auch zur Erfassung unsymmetrischer Spannungspulse unterschiedlich sein kann.

Die Separation der positiven und negativen Spannungspulse für eine getrennte Filterung erfolgt allein durch gegenpolige Referenzspannungen an den zwei Komparatoren **Cp, Cn0.** Außerdem wird für jeden Filterzweig nur ein Komparator benötigt, **Cp** für positiven Spannungspulse und **Cn0** für die negativen Spannungspulse eines Datentelegramms. Man erspart sich also je Filterzweig eine Vielzahl von Komparatoren für die Generierung fester Schwellwerte. Daraus ergeben sich insgesamt geringe Kosten und ein sehr kleiner Flächenbedarf bei der Implementierung der Empfängerschaltung in einer integrierten Schaltungstechnik. Beide Faktoren sind für AS- Interface Anwendungen entscheidende Einsatzmerkmale.

Alle Komparatoren **Cp, Cn0** ... **Cnn** arbeiten zeitdiskret. Die Signalamplitude der positiven und negativen Spannungspulse wird in äquidistanten Zeitabständen abgetastet, und entsprechend der abgetasteten Pulsbreite nehmen die Komparatoren einen Schaltzustand ein. Damit werden die Ausgangssignale der Komparatoren bereits auf das Taktschema der nachfolgenden Digitalschaltung, bestehend aus der Auswertelogik **RL** und digitalen Filtern **Dp, Dn,** synchronisiert und ggf. hochfrequente Störungen unterdrückt. Die Zeitabstände der Abtastung betragen beispielsweise 1/24 der nominalen Pulsbreite eines Spannungspulses.

Die Ausgänge der beiden Komparatoren **Cp, Cn0** sind getrennt auf die zwei digitalen Filter **Dp, Dn** geführt. Diese Filter **Dp, Dn** unterdrücken Pulse, die entsprechend ihrer Filterzeit eine bestimmte Pulsbreite unterschreiten und dadurch als Störpulse detektiert werden. Sie lassen sich daher einfach aufbauen. In vorteilhafter Weise kann hierdurch auf einen analogen Tiefpass verzichtet werden, womit auch hierdurch bei der Implementierung in einer integrierten Schaltungstechnik weniger Chipfläche benötigt wird und eine bessere Reproduzierbarkeit des Systemverhaltens erreicht wird. Die Filterzeit kann des Weiteren durch die Entscheiderlogik **RL** derart beeinflusst werden, dass größere Maximalwerte des ersten negativen Spannungsimpulses eines Datentelegramms zu einer größeren Filterzeit führen und umgekehrt. Dies ermöglicht eine Wichtung zwischen Nutzsignal und Störsignal bei der Ermittlung des Maximalwertes des ersten negativen Spannungspulses.

Die Ausgänge der digitalen Filter **Dp, Dn** sind auf einen digitalen Decoder **UL** geführt, in welchem die binäre Signalfolge der übertragenen Daten zurück gewonnen wird. Außerdem erkennt der Decoder **UL** das Ende eines Datentelegramms und setzt die Entscheiderlogik **RL** in einen definierten Ausgangszustand zurück.

Am Ausgang des Decoders **UL** stehen die von Störpulsen gefilterten binären Empfangssignale unmittelbar zur Weiterverarbeitung zur Verfügung.

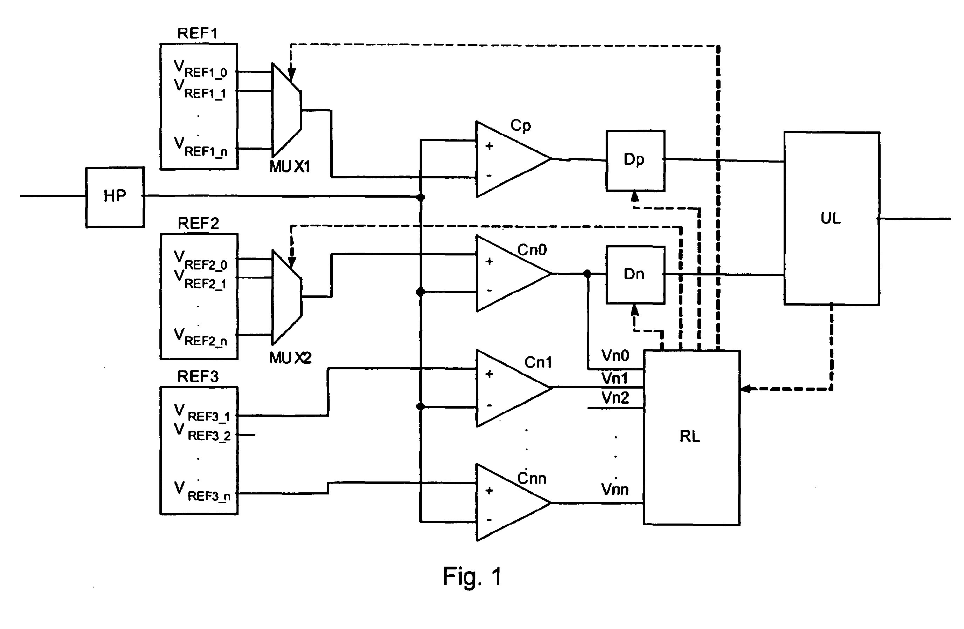

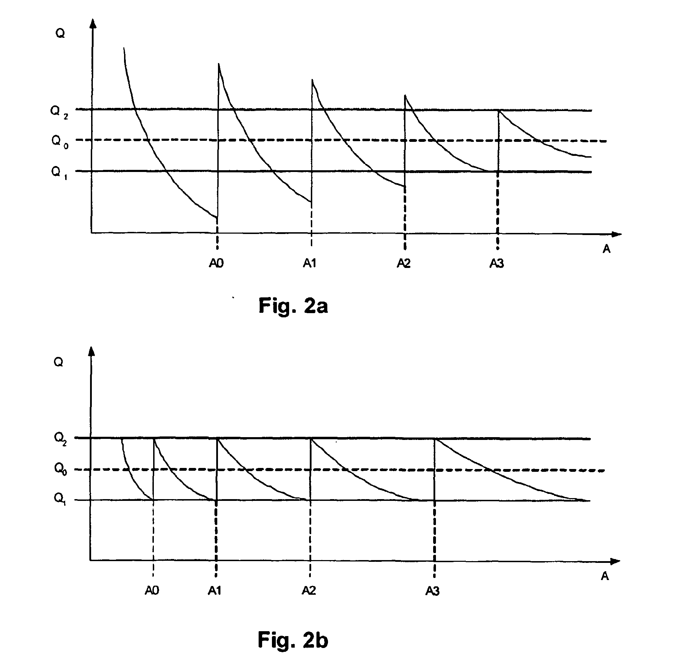

Anhand der in Fig. 2 dargestellten zwei Kennlinien soll die Arbeitsweise der Empfängerschaltung nach Fig. 1 näher erläutert werden.

Mit **A** ist die Amplitude des ersten negativen Spannungspulses eines Datentelegramms bezeichnet. Die speziellen diskreten Werte **A0, A1, A2, A3** ... auf der Abszisse bezeichnen jeweils diejenige Amplitude, die genau einer Referenzspannung an den Komparatoren **Cn0, Cn1, Cn2, Cn3** ... entspricht. Auf der mit **Q** bezeichneten Ordinate ist jeweils der Quotient aus dem ausgewählten Schwellwert der Komparatorspannung und der Amplitude des ersten negativen Spannungspulses **A** dargestellt. Der Wert **Q** entspricht also dem tatsächlichen prozentualen Schwellwert, mit dem die dem ersten negativen Spannungspuls nachfolgenden negativen und positiven Spannungspulse bewertet werden, bezogen auf die Amplitude des ersten negativen Spannungspulses. Infolge der endlichen Anzahl von Komparatoren der Komparatoranordnung **Cn0** ... **Cnn** und der damit verbundenen Quantisierung variiert der Wert **Q** um einen bestimmten nominellen Wert **Q0,** der beispielsweise 0,5 betragen kann. Um eine ausreichende Datensicherheit zu gewährleisten, sollte diese Variation möglichst minimiert werden. Die Werte **Q1** und **Q2** geben beispielsweise eine Bandbreite von 0,45 bis 0,55 um den nominellen Wert **Q0** an.

Wie aus Fig. 2a zu erkennen ist, in welcher die Referenzspannungen **A0, A1, A2, A3** ... in äquidistanten Abständen angeordnet sind, sinkt diese Variation mit steigender Signalamplitude.

Vorteilhafter hingegen ist eine gemäß Fig. 2b gleich bleibende Variation über den gesamten Dynamikbereich eines Empfängers. Dies wird erreicht, indem die Abstände zwischen den einzelnen Referenzspannungen für die Komparatoren **Cn0** ... **Cnn** exponentiell ansteigen, beginnend bei der betragsmäßig kleinsten Referenzspannung. Dabei hat die Referenzspannung an einer Stelle n den Wert:

$$V_{REFn} = k^n * V_{REF0}$$

wobei $V_{REF0}$ die kleinste Referenzspannung ist und k der Quotient aus den Werten der oberen und unteren Grenze des Variationsbereichs Q2 ÷ Q1.

**Patentansprüche**

1. Empfängerschaltung für alternierende pulsmodulierte, APM- kodierte Daten, die in Abhängigkeit der Signalamplitude eines Datentelegramms, und getrennt nach positiven und negativen Spannungspulsen, abgetastet werden, insbesondere in einem Aktuator-Sensor, AS- Interface Kommunikationssystem,
   **dadurch gekennzeichnet,**
   **dass** die positiven Spannungspulse von einem Komparator **(Cp)** und die negativen Spannungspulse von einem weiteren Komparator (**Cn0**) abgetastet werden, deren Referenzspannungen **(VREF1_0 ... VREF1_n; VREF2_0 ... VREF2_n)** eine Entscheiderlogik (RL) in Abhängigkeit der Signalamplitude diskret umschaltet, wobei die Signalamplitude des jeweils ersten negativen Spannungspulses eines Datentelegramms zur Auswahl der Referenzspannung **(VREF1_0 ... VREF1_n; VREF2_0 ... VREF2_n)** für die Abtastung aller nachfolgenden Spannungspulse an den Komparatoren **(Cp, Cn0)** herangezogen wird.

2. Empfängerschaltung nach Anspruch 1,
   **dadurch gekennzeichnet,**
   **dass** die Bewertung der Signalamplitude anhand einer Anordnung von Komparatoren **(Cn0** ... **Cnn)** erfolgt, deren Referenzspannungen zueinander in diskreten Schritten fest eingestellt sind.

3. Empfängerschaltung nach Anspruch 2,
   **dadurch gekennzeichnet,**
   **dass** eine am Ausgang der Komparatorenanordnung **(Cn0** ... **Cnn)** angeordnete Entscheiderlogik **(RL)** die Umschaltung der Referenzspannungen **(VREF1_0 ... VREF1_n; VREF2_0 ... VREF2 n)** über Multiplexer **(MUX1; MUX2)** vornimmt.

4. Empfängerschaltung nach Anspruch 2,

**dadurch gekennzeichnet,**
**dass** für die Abtastung der negativen Spannungspulse eines Datentelegramms ein von der Komparatorenanordnung **(Cn0 ... Cnn)** separater Komparator eingesetzt ist.

5. Empfängerschaltung nach einem der vorstehenden Ansprüche,
**dadurch gekennzeichnet,**
**dass** die Differenzen zwischen den Referenzspannungen **(V$_{REF1}$..., V$_{REF2}$ ..., V$_{REF3}$ ...)** der Komparatoren **(Cp, Cn0 ... Cnn)** exponentiell ansteigen, beginnend bei der betragsmäßig kleinsten Referenzspannung.

6. Empfängerschaltung nach Anspruch 2,
**dadurch gekennzeichnet,**
**dass** die Komparatoren **(Cp, Cn0 ... Cnn)** die Signalamplitude in äquidistanten Zeitabständen abtasten.

7. Empfängerschaltung nach Anspruch 6,
**dadurch gekennzeichnet,**
**dass** die Zeitabstände der Abtastung 1/24 der nominalen Impulsbreite eines Spannungsimpulses betragen.

8. Empfängerschaltung nach Anspruch 1,
**dadurch gekennzeichnet,**
**dass** die Ausgänge der beiden Komparatoren **(Cp, Cn0)** zur Abtastung der positiven und negativen Signalpulse auf je einen digitalen Filter **(Dp, Dn)** geführt sind, die Pulse oberhalb einer ausgewählten Pulsbreite an eine gemeinsame nachgeordnete Auswerteeinheit **(UL)** liefern.


**Claims**

1. Receiver circuit for alternating pulse modulation (APM)-coded data sampled depending on the signal amplitude of a data telegram and separately by positive and negative voltage pulses, especially in an actuator-sensor (AS) interface communication system
**characterized in that**
the positive voltage pulses are sampled by a comparator (Cp) and the negative voltages pulses are sampled by an additional comparator (Cn0) the reference voltages of which (VREF1_0 ...VREF1_n; VREF2_0...VREF2_2) discretely changing over a decision logic (RL) depending on the signal amplitude with the signal amplitude of each first negative voltage pulse of a data telegram each being used for selecting the reference voltage (VREF1_0... VREF1_n; VREF20...VREF2_n) to sample all subsequent voltage pulses at the comparators (Cp, Cn0).

2. Receiver circuit as claimed in claim 1
**characterized in that**
the signal amplitude is evaluated based on a setup of comparators (Cn0 ... Cnn) the reference voltage of which being firmly set to each other in discrete steps.

3. Receiver circuit as claimed in claim 2
**characterized in that**
a decision logic (RL) arranged at the outlet of the comparator setup (Cn0 ... Cnn) effects the changeover of the reference voltages (VREF1_0... VREF1_n; VREF20...VREF2_n) through multiplexers (MUX1; MUX2).

4. Receiver circuit as claimed in claim 2
**characterized in that**
for the purpose of sampling the negative voltage pulses of a data telegram a comparator separate from the comparator setup (Cn0 .. Cnn) is used.

5. Receiver circuit in accordance with one of the aforesaid claims
**characterized in that**
the differences between the reference voltages (V$_{REF1}$..., V$_{REF2}$..., V$_{REF3}$...) of the comparators (Cp, Cn0 ...Cnn) rise exponentially beginning with the smallest reference voltage in terms of amount.

6. Receiver circuit as claimed in claim 2
**characterized in that**
the comparators (Cp, Cn0 ...Cnn) sample the signal amplitude at equidistant intervals.

7. Receiver circuit as claimed by claim 6
**characterized in that**
the sampling intervals are 1/24 of the nominal pulse width of one voltage pulse.

8. Receiver circuit as claimed by claim 1
**characterized in that**
the outlets of the two comparators (Cp, Cn0) to sample the positive and negative signal pulses are routed to one digital filter (Dp, Dn) each delivering the pulses above a selected pulse width to a shared downstream evaluation unit (UL).


**Revendications**

1. Circuit récepteur pour des données codées par modulation d'impulsions alternante APM, qui sont explorées en fonction de l'amplitude de signal d'un télégramme de données et de manière triée selon les impulsions de tension positives et négatives, en particulier dans un système de communication à interface actionneur-capteur AS,
**caractérisé en ce que**

lesdites impulsions positives sont explorées par un comparateur (Cp) et lesdites impulsions négatives sont explorées par un autre comparateur (Cn0), dont les tensions de référence (VREF1_0 ... VREF1_n ; VREF2_0 ... VREF2_n) sont discrètement commutées par une logique de décision (RL) en fonction de l'amplitude de signal, l'amplitude de signal de la première impulsion négative d'un télégramme de données étant retenue pour le choix de la tension de référence (VREF1_0 ... VREF1_n; VREF2_0 ... VREF2_n) destinée à l'exploration de toutes les impulsions de tension subséquentes par lesdits comparateurs (Cp, Cn0).

2. Circuit récepteur selon la revendication 1,
   **caractérisé en ce que**
   l'évaluation de ladite amplitude de signal a lieu sur la base d'un ensemble de comparateurs (Cn0 ... Cnn), dont les tensions de référence sont réglées l'une par rapport à l'autre de manière fixe par pas discrets.

3. Circuit récepteur selon la revendication 2,
   **caractérisé en ce qu'une**
   logique de décision (RL) située à la sortie dudit ensemble de comparateurs (Cn0 ... Cnn) assure la commutation desdites tensions de référence (VREF1_D ... VREF1_n ; VREF2_0 ... VREF2_n) au moyen des multiplexeurs (MUX1 ; MUX2).

4. Circuit récepteur selon la revendication 2,
   **caractérisé en ce que**
   pour l'exploration desdites impulsions négatives d'un télégramme de données, un comparateur séparé dudit ensemble de comparateurs (Cn0 ... Cnn) est utilisé.

5. Circuit récepteur selon une des revendications précédentes,
   **caractérisé en ce que**
   les différences entre lesdites tensions de référence ($V_{REF1}$ ..., $V_{REF2}$ ..., $V_{REF3}$ ...) desdits comparateurs (Cp, Cn0 ... Cnn) augmentent de manière exponentielle à partir de la tension de référence de la plus faible valeur.

6. Circuit récepteur selon la revendication 2,
   **caractérisé en ce que**
   lesdits comparateurs (Cp, Cn0 ... Cnn) explorent ladite amplitude de signal dans des intervalles équidistants.

7. Circuit récepteur selon la revendication 6,
   **caractérisé en ce que**
   lesdits intervalles de l'exploration sont de 1/24$^e$ de la largeur d'impulsions nominale d'une impulsion de tension.

8. Circuit récepteur selon la revendication 1,
   **caractérisé en ce que**
   les sorties des deux comparateurs (Cp, Cn0) destinés à l'exploration des impulsions de signal positives et négatives sont réalisées chacune sur un filtre numérique (Dp, Dn) qui fournit les impulsions au-dessus d'une largeur d'impulsions choisie à une unité d'interprétation (UL) disposée en aval.

Fig. 1

EP 1 719 313 B1

**Fig. 2a**

**Fig. 2b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4316810 C1
- DE 19850928 C2